# EUROPÄISCHE PATENTSCHRIFT

(11) **EP 2 589 894 B1**
(45) Veröffentlichungstag und Bekanntmachung des Hinweises auf die Patenterteilung: **18.07.2018**
(21) Anmeldenummer: 12191088.9
(22) Anmeldetag: 02.11.2012
(51) Int. Cl.: F24S 25/00, B32B 15/09, B32B 15/20

(54) **Verwendung eines Bautenschutzes zur Montage auf einer Dachabdichtung**
Use of a building protection for installation on a roof waterproofing structure
Utilisation d'une protection de construction pour le montage sur une structure d'étanchéité de toit

(30) Priorität: 04.11.2011 DE 202011107456 U
(43) Veröffentlichungstag der Anmeldung: 08.05.2013
(73) Patentinhaber: Berleburger Schaumstoffwerk GmbH, 57319 Bad Berleburg (DE)
(72) Erfinder: Weller, Horst, 57319 Bad Berleburg (DE)
(74) Vertreter: Lippert Stachow Patentanwälte Rechtsanwälte

(56) Entgegenhaltungen:
- EP-A1- 0 011 753
- EP-A2- 0 039 158
- DE-A1- 3 220 368
- DE-A1- 3 444 669
- DE-A1- 10 101 781
- DE-A1- 10 334 714
- DE-U- 6 601 805
- US-A- 4 911 975
- US-A- 5 744 225
- US-A1- 2011 135 882

## Beschreibung

Die Erfindung betrifft die Verwendung eines Bautenschutzes zur Montage von einer Solaranlage auf der Dachabdichtung eines Flachdachs, umfassend zumindest eine erste Schicht zum Schutz der in Einbaulage darunter angeordneten Dachabdichtung gegen mechanische Beanspruchung.

Ein derartig verwendeter Bautenschutz ist als ein flacher Belag aus Gummi bekannt. Die elastischen Eigenschaften von Gummi gewährleistet eine ausgeglichene Verteilung des Gewichts von Solaranlagen bzw. deren Standvorrichtungen und schützen auf diese Weise vor mechanischer Beanspruchung. Zumeist weisen die Dachabdichtungen von Flachdächern Materialien auf, die Weichmacher enthalten z.B. Weich-PVC-Abdichtungen. Der bekannte Bautenschutz aus Gummi führt zu einer Migration der Weichmacher von der Dachabdichtung in den Bautenschutz. Die Dachabdichtung wird spröde und kann insbesondere unter der Last der Solaranlage auf dem Dach einreißen. Einen gattungsgemäßen Bautenschutz offenbart das Dokument US 2011/0135882 A1. In diesem Dokument ist ein Bautenschutz offenbart, der zur Montage auf einer Dachabdichtung und zur Montage von einer Solaranlage auf der Dachabdichtung eines Flachdachs geeignet ist. Der Bautenschutz weist mehrere Schichten auf, die jeweils aus einem elastischen Polymermaterial bestehen.

Die DE 103 34 714 A1 offenbart einen Bautenschutz in Form einer Dach- und Dichtbahn, die auf einem Flachdach verlegt werden kann und eine Faserschicht, die auf der Unterseite eine Metallisierung aufweist, umfasst. Dieser bekannte Bautenschutz dient dem Schutz vor elektromagnetischen Feldern oder Wellen.

Ausgehend von diesem Stand der Technik liegt der Erfindung die Aufgabe zugrunde, eine Verwendung eines Bautenschutzes zur Montage einer Solaranlage bereit zu stellen, wobei der Bautenschutz einen Schutz gegen mechanische und chemische Einflüsse realisiert und somit einen umfassenderen Schutz der Dachabdichtung ermöglicht.

Die der Erfindung zugrunde liegende Aufgabe wird dadurch gelöst, dass bei der Verwendung eines Bautenschutzes der Bautenschutz zumindest eine zweite Schicht zum Schutz der Dachabdichtung gegen Weichmachermigration aufweist, wobei die zweite Schicht ein Metall umfasst. Durch diese zweite Schicht wird die Weichmachermigration aus der Dachabdichtung in die Umgebung und insbesondere in die erste Schicht des Bautenschutzes verhindert. Erfindungsgemäß umfasst die erste Schicht Filz, ein Gewebe oder Schaum aus Kunststoff oder einen Verbundwerkstoff mit elastischen Materialien, wobei die erste Schicht eine Stärke von 4 mm bis 45 mm und die zweite Schicht eine Stärke von 0,004-0,02 mm aufweist, wobei zur Montage der Solaranlage auf der Dachabdichtung der Bautenschutz mit der zweiten Schicht nach unten auf die Dachabdichtung aufgelegt wird und anschließend die Solaranlage auf die nach oben weisende erste Schicht aufgesetzt wird. Dadurch weist der Bautenschutz einen umfassenderen Schutz gegen schädliche Einflüsse auf als der bekannte Bautenschutz.

Erfindungsgemäß umfasst die zweite Schicht eine Aluminiumfolie.

Erfindungsgemäß weist die Aluminiumfolie eine Polyethylen- oder Polyester-Beschichtung auf.

In Einbaulage realisieren die vorgenannten Beschichtungen eine höhere Reibung mit der Abdichtung des Dachs und verbessern somit die Standsicherheit von einer Solarlage sowie die eines Menschen bei Anwendung des Bautenschutzes als Belag für Inspektionswege zur Solaranlage.

Die Beschichtung der zweiten Schicht kann Verbindungsmittel umfassen, um die Verbindung der zweite Schicht und der ersten Schicht bei der Herstellung des Bautenschutzes zu erleichtern. Diese Verbindungsmittel können beispielsweise als Acrylat-Kleber ausgebildet sein, so dass eine selbstklebende zweite Schicht realisierbar ist.

Die zumindest eine zweite Schicht ist in Einbaulage zwischen der ersten Schicht und der Dachabdichtung angeordnet.

Die zweite Schicht weist eine Stärke von 0,004 mm-0,02 mm und die die erste Schicht eine Stärke von 4 - 45 mm auf. Diese umfasst vorzugsweise einen elastischen Werkstoff, beispielsweise Gummi. Besonders bevorzugt umfasst die erste Schicht einen Verbundwerkstoff aus Gummigranulat oder - Fasern mit Polyurethan-Bindemitteln.

Unter dem Namen Regupol ist ein derartiger Werkstoff der Anmelderin bekannt, der beispielsweise als Bahnenbelag von Sportanlagen verwendet wird. Eine derartige erste Schicht hat gute Hafteigenschaften. Der Bautenschutz wird dann als besonders rutschfeste Unterlage für Solaranlagen verwendet.

Ferner kann die erste Schicht ein Gewebe oder einen Schaum aus einem Kunststoff umfassen, z.B. Polyethylenschaum.

Die erste Schicht kann auch Filz umfassen. Insbesondere bei elastischen ersten Schichten ohne Gummi oder Kunststoff, verhindert die erste Schicht zusammen mit der zweiten Schicht die Weichmachermigration aus der Dachabdichtung in die Umgebung und führt somit zu einem verbesserten Schutz gegen chemische Einflüsse.

Der Bautenschutz kann plattenartig ausgebildet sein. Derartige Platten können vorzugsweise die Maße 2,30*1,15*0,006 m³, 1,00* 0,50* 0,043 m³ oder 1,00*0,50*0,03 m³ aufweisen.

Besonders bevorzugt weist diese Bautenschutz-Platte Verbindungsmittel zur Verbindung benachbarter Platten auf. Diese Verbindungsmittel können beispielsweise Stift-Lochverbindungen bzw. Steckdübel, Nut-Feder Verbindung, Magnetverbindungen u. Ä. umfassen.

An der Unterseite des Bautenschutzes kann die in Einbaulage der Dachabdichtung zugewandte Seite Drainagerillen für Regenwasser aufweisen. Diese verlaufen besonders bevorzugt kreuzförmig, so dass der Bautenschutz in jeder Position zur Gefällerichtung aufgelegt werden kann.

Der Bautenschutz kann vorzugsweise als abrollbare Meterware ausgebildet sein. Diese kann beispielsweise die Maße 10*1,250*0.006 m³ aufweisen.

Bei der Herstellung des Bautenschutzes als Meterware wird beispielsweise die erste Schicht in eine Bandbeschichtungsanlage eingebracht, die die zweite Schicht z.B. mit einer Hotmelt-Verklebung auf die erste Schicht klebt. Hierfür wird sogenanntes Hotmelt-Pulver oder -Folie zwischen die erste und die zweite Schicht aufgebracht. Beim anschließenden Verpressen und Erwärmen schmilzt das Holtmelt-Pulver oder -Folie und verklebt. Ferner können andere Verbindungsverfahren oder auch selbstklebende zweite Schichten verwendet werden.

Bei der Herstellung des Bauschutzes in der Ausführungsform als Platte wird vorzugsweise eine Form verwendet. In diese Form wird zunächst die zweite Schicht eingelegt. Der Werkstoff für die erste Schicht wird anschließend eingebracht und erhält dann durch Verpressen die gewünschte Form. Beim Verpressen verbindet sich auch die zweite Schicht mit der Ersten.

Weitere Einzelheiten, Vorteile und Merkmale der Erfindung lassen sich dem folgenden Teil der Beschreibung entnehmen, in dem bevorzugte Ausführungsformen eines Bautenschutzes näher erläutert werden. Es zeigen:
- Fig. 1: eine schematische Frontansicht einer ersten Ausführungsform des Bautenschutzes;
- Fig. 2: eine schematischen Frontansicht einer zweiten plattenartigen Ausführungsform des Bautenschutzes; und
- Fig. 3: eine schematische Draufsicht auf eine Anordnung von zwei plattenartigen Bautenschutzen gemäß Fig. 2.

Gleiche oder gleich wirkende Teile sind mit denselben Bezugszeichen versehen.

Dementsprechend umfasst der Bautenschutz 10 zur Montage von einer Solaranlage 12 auf der Dachabdichtung 11 eines Flachdachs, zumindest eine erste Schicht 13 zum Schutz der in Einbaulage darunter angeordneten Dachabdichtung 11 vor mechanischer Beanspruchung. Zudem umfasst der Bautenschutz 10 zumindest eine in Einbaulage unter der ersten Schicht 13 angeordnete zweite Schicht 14 zum Schutz der Dachabdichtung 11 gegen Weichmachermigration.

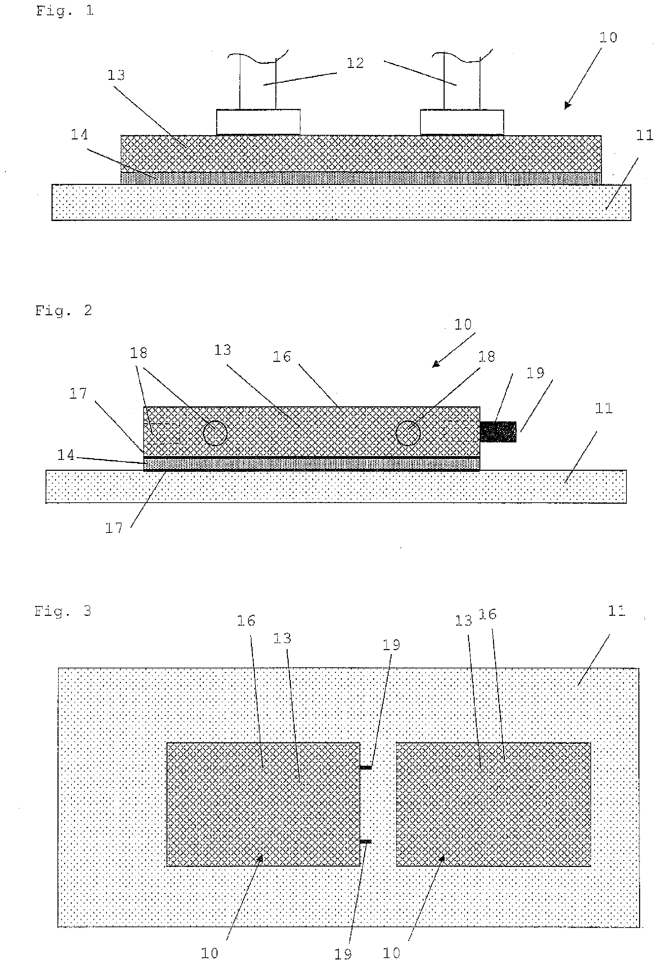

Die in der Figur 1 dargestellte Ausführungsform des Bautenschutzes 10 ist als abrollbare Meterware ausgebildet. Diese weist vorliegend die Maße 10*1,250*0,006 m³ auf.

Die erste Schicht 13 umfasst einen Verbundwerkstoff aus Gummigranulat mit Polyurethan-Bindemittel. Bei der ersten bevorzugten Ausführungsform weist diese erste Schicht 13 eine Stärke von ca. 6 mm auf.

An der der Dachabdichtung 11 zugewandten Seite des Bautenschutzes 10 ist die zweite Schicht 14 mit der ersten Schicht 13 verbunden. Die zweite Schicht 14 ist vorliegend als eine ca. 0,02 mm dünne Aluminiumfolie ausgebildet. An der der Dachabdichtung 11 abgewandten Seite sind zwei Füße der Standvorrichtung einer Solaranlage 12 angedeutet.

Die in den Figuren 2 und 3 dargestellte Ausführungsform unterscheidet sich zunächst von der in Figur 1 dargestellten Ausführungsform dadurch, dass sie als eine rechteckige Platte 16 zum Belag eines Inspektionsweges ausgebildet ist. Die Platte 16 weist die Maße 1*0,5*0,3 m³ auf.

Die zweite Schicht 14 ist hier ebenfalls als 0,02 mm dünne Aluminiumfolie ausgebildet. An ihrer Ober- und Unterseite weist die Aluminiumfolie eine Polyethylen-Beschichtung auf.

Die erste Schicht 13 weist bei der zweiten Ausführungsform des Bautenschutzes eine Stärke von ca. 30 mm auf und ist was den Werkstoff betrifft ansonsten gemäß der ersten Ausführungsform dargestellt in Figur 1, ausgebildet. Ferner weist die Platte 16 an Ihren umfänglichen Seiten ihrer ersten Schicht 13 Löcher 18 für Verbindungsstifte 19 auf.

Die Figur 3 zeigt eine Draufsicht auf Anordnung von zwei zu verbindenden Platten 16. Die Platten 16 können durch aneinander Schieben mittels zwei Verbindungsstiften 19 verbunden werden. Andere geeignete lösbare Verbindungsmittel sind realisierbar, so z.B. eine Nut-/Federverbindung.

### Bezugszeichenliste

- 10: Bautenschutz
- 11: Dachabdichtung
- 12: Solaranlage
- 13: erste Schicht
- 14: zweite Schicht
- 15: Meterware
- 16: Platte
- 17: Beschichtung
- 18: Loch
- 19: Verbindungsstift

## Patentansprüche

1. Verwendung eines Bautenschutzes (10) zur Montage von einer Solaranlage (12) auf einer Dachabdichtung (11) eines Flachdachs, der Bautenschutz umfassend zumindest eine erste Schicht (13) zum Schutz der in Einbaulage darunter angeordneten Dachabdichtung (11) sowie zumindest eine zweite Schicht (14), **DADURCH GEKENNZEICHNET, dass** die zweite Schicht (14) eine Aluminiumfolie mit einer Polyethylen- oder Polyester-Beschichtung umfasst und zum Schutz der Dachabdichtung (11) gegen Weichmachermigration ausgebildet ist, und dass die erste Schicht (13) Filz, ein Gewebe oder Schaum aus Kunststoff oder einen Verbundwerkstoff mit elastischen Materialien umfasst, wobei die erste Schicht eine Stärke von 4-45 mm und die zweite Schicht eine Stärke von 0,004-0,02 mm aufweist, wobei zur Montage der Solaranläge (12) auf der Dachabdichtung (11) der Bautenschutz (10) mit der zweiten Schicht (14) nach unten auf die Dachabdichtung (11) aufgelegt wird und anschließend die Solaranlage (12) auf die nach oben weisende erste Schicht (13) aufgesetzt wird.

2. Verwendung eines Bautenschutzes (10) nach Anspruch 1, **DADURCH GEKENNZEICHNET, dass** die zweite Schicht (14) Polyurethan umfasst.

## Claims

1. Use of a building protection (10) for mounting a solar system (12) on a roof waterproofing structure (11) of a flat roof, wherein the building protection comprises at least one first layer (13) for protection the roof waterproofing structure (11) placed underneath in mounting position as well as at least one second layer (14), **characterized in that** the second layer (14) comprises an aluminum foil with a polyethylene or a polyester coating and is configured for the protection of the roof waterproofing structure (11) against plasticizer migration and that the first layer (13) comprises felt, a fabric or a foam made of synthetic material or a composite material with elastic materials, wherein the first layer has a thickness of 4 to 45 mm and the second layer a thickness of 0,004 to 0,02 mm, wherein the building protection (10) is placed with the second layer (14) downwards onto the roof waterproofing structure (11) for mounting the solar system (12) on the roof waterproofing structure (11) and then the solar system (12) is placed onto the first layer (13) facing upwards.

2. Use of a building protection (10) according to claim 1, **characterized in that** the second layer (14) comprises polyurethane.

## Revendications

1. Utilisation d'une protection de construction (10) pour le montage d'une installation solaire (12) sur une étanchéité de toit (11) d'un toit plat, la protection de construction comprenant au moins une première couche (13) pour la protection de l'étanchéité de toit (11) posée en dessous en position de montage ainsi qu'au moins une seconde couche (14), **caractérisée en ce que** la seconde couche (14) comprend une feuille d'aluminium avec une enduction de polyéthylène ou de polyester et est configurée pour la protection de l'étanchéité de toit (11) contre la migration de plastifiants et que la première couche comprend du feutre, un tissu ou une mousse de matière synthétique ou un matériau composite avec des matériaux élastiques, la première couche présentant une épaisseur de 4 à 45 mm et la seconde couche une épaisseur de 0,004 à 0,02 mm, cependant que la protection de construction (10) est posée avec la seconde couche (14) vers le bas sur l'étanchéité de toit (11) pour le montage de l'installation solaire (12) sur l'étanchéité de toit (11) et qu'ensuite l'installation solaire (12) est posé sur la première couche (13) tournée vers le haut.

2. Utilisation d'une protection de construction (10) selon la revendication 1, **caractérisée en ce que** la seconde couche (14) comprend du polyuréthane.
